# EUROPÄISCHE PATENTANMELDUNG

(11) **EP 1 371 523 A2**
(43) Veröffentlichungstag der Anmeldung: **17.12.2003**
(21) Anmeldenummer: 03009695.2
(22) Anmeldetag: 30.04.2003
(51) Int. Cl.: B60R 16/02, H04L 12/40, H04L 29/14

(54) **Fahrzeugbusystem mit redundanten Leitungen**

(30) Priorität: 11.06.2002 DE 10225888
(71) Anmelder: DaimlerChrysler AG, 70567 Stuttgart (DE)
(72) Erfinder: Becker, Dieter, 76479 Steinmauern (DE); Fischer, Jörg, 73733 Esslingen (DE); Mai, Markus, 76461 Muggensturm (DE); Reichle, Stephan, 73760 Ostfildern (DE); Schäfer, Ralf, 70186 Stuttgart (DE); Wippermann, Michael, 70794 Filderstadt (DE)

(57) **Zusammenfassung**

Die Erfindung betrifft ein Fahrwerksystem (1), insbesondere Bremssystem, für ein Fahrzeug. Eine Leitungsanordnung (23) verbindet eine Steuereinrichtung (2) und wenigstens zwei mit der Steuereinrichtung (2) in Kommunikationsverbindung stehende Moduleinheiten (5, 6, 7, 8), die zur Umsetzung der Steuerbefehle der Steuereinrichtung in Aktuatorsignale für jeweils zugeordnete Aktuatoren dienen. Die Leitungsanordnung (23) verbindet dabei die Steuereinrichtung (2) und die Moduleinheiten (5, 6, 7, 8) sozusagen seriell, so dass eine offene Ringleitung entsteht.

## Beschreibung

Die Erfindung betrifft ein Fahrwerksystem für ein Fahrzeug mit einer Steuereinrichtung und mit einer Kommunikationseinrichtung mittels der eine Kommunikationsverbindung zwischen der Steuereinrichtung und wenigstens zwei Moduleinheiten herstellbar ist, die zur Umsetzung der Steuerbefehle der Steuereinrichtung in Aktuatorsignale für jeweils zugeordnete Aktuatoren dienen.

Ein derartiges Fahrwerksystem ist aus der DE 195 26 250 A1 bekannt, wobei es sich um ein Brems- und Lenksystem handelt. Die Steuereinrichtung ist über einen redundant vorgesehenen Datenbus, der die Kommunikationseinrichtung darstellt, mit den verschiedenen Komponenten des Brems- und Lenksystems zur Signalübertragung verbunden. Der Datenbus kann als Stern oder Ring ausgeführt sein.

Auch aus der DE 199 18 995 A1 ist es bekannt bei einem Lenk und Bremssystem eine redundante Datenbusverbindung als Kommunikationseinrichtung einzusetzen.

Ausgehend vom gattungsbildenden Fahrwerksystem ist es die Aufgabe der vorliegenden Erfindung ein modulares Fahrwerksystem zu schaffen, deren Kommunikationsverbindung mit geringem Aufwand hergestellt werden kann.

Die wird durch ein Fahrwerksystem mit den Merkmalen des Patentanspruches 1 erreicht.

Ausgehend von der Steuereinrichtung werden die Moduleinheiten sozusagen hintereinander geschaltet. Im Gegensatz zu den sonst üblichen Verdrahtungsmethoden im Fahrzeug muss hier nicht jede Moduleinheit ausgehend von der Steuereinrichtung durch eine separate Leitung verbunden werden (Stern) oder eine ringförmig geschlossene Kommunikationsverbindung hergestellt werden. Dabei besteht die Möglichkeit, insbesondere bei der Steuereinrichtung, die Anzahl der Steckverbindungen-die häufig fehleranfällig sind - gegenüber der bisher in Fahrzeugen üblichen Verdrahtung zu reduzieren. Der Kostenaufwand kann durch diese Maßnahme ebenfalls reduziert werden.

Weitere vorteilhafte Ausführungsformen gehen aus den abhängigen Ansprüchen hervor.

Vorteilhafterweise weist die Kommunikationseinrichtung eine weitere, zweite Leitungsanordnung auf, die die Steuereinrichtung direkt mit der Endmoduleinheit und ausgehend von der Endmoduleinheit weiter über die gegebenenfalls vorhandenen weiteren Moduleinheiten mit der ersten Moduleinheit verbindet. Im Vergleich zur ersten Leitungsanordnung verbindet die zweite Leitungsanordnung die Steuereinrichtung mit den Moduleinheiten sozusagen in umgekehrter Reihenfolge. Die erste Leitungsanordnung und die zweite Leitungsanordnung bilden somit jeweils eine "offene Ringleitung", wobei die erste Leitungsanordnung an der Endmoduleinheit endet und die zweite Leitungsanordnung an der ersten Moduleinheit endet. Durch diese Verdrahtung wird eine Redundanz in der Kommunikationseinrichtung erreicht bei gleichzeitig geringem Verdrahtungsaufwand.

Die Steuereinrichtung und die Moduleinheiten weisen zweckmäßigerweise jeweils eine Dateneinheit zum Senden und/oder Empfangen und/oder Aufbereiten von Kommunikationssignalen auf, um eine Anbindung der Steuereinrichtung bzw. der betreffenden Moduleinheit an die Kommunikationseinrichtung herzustellen. An die Dateneinheit können auch beide Leitungseinrichtungen angeschlossen sein. Alternativ hierzu kann die Steuereinrichtung bzw. eine oder mehrere der Moduleinheiten zusätzlich eine zweite Dateneinheit aufweisen, wobei dann die eine Dateneinheit mit der einen Leitungsanordnung und die andere Dateneinheit mit der anderen Leitungsanordnung verbunden ist. Hierdurch wird zusätzlich eine Redundanz in den Dateneinheiten vorgesehen und eine höhere Fehlersicherheit erreicht.

Die Dateneinheiten dienen vorteilhafter Weise zur Überprüfung der auf den jeweils zugeordneten Leitungsanordnungen übertragenen Kommunikationssignalen auf Fehler, um die Funktionalität und damit auch die Betriebssicherheit der Kommunikationseinrichtung zu gewährleisten. Die festgestellten Fehler können dabei dem Fahrer zumindest dann angezeigt werden, wenn durch den Fehler eine eingeschränkte Funktionalität oder Betriebssicherheit des Fahrwerksystems entstanden ist oder entstehen kann. Aufgrund der dem Fahrer übermittelten Information kann dieser in Abhängigkeit vom ermittelten Fehler angemessen reagieren und sein Fahrverhalten entsprechend anpassen. Gegebenenfalls wird er durch die Anzeige auch veranlasst, das Fahrzeug bei gravierenden Fehlern abzustellen. Durch diese Maßnahme wird die Fahrsicherheit wesentlich erhöht.

Bei dem Fahrwerksystem kann es sich beispielsweise um ein Bremssystem handeln. Dabei kann zumindest einer der Fahrzeugachsen eine als Achsmoduleinheit bezeichnete Moduleinheit zugeordnet sein, die die Radbremsaktuatoren der Radbremseinrichtungen der betreffenden Fahrzeugachse ansteuert. Alternativ oder zusätzlich besteht die Möglichkeit, jedem Fahrzeugrad wenigstens einer Fahrzeugachse eine als Radmoduleinheit bezeichnete Moduleinheit zuzuordnen, die den Radbremsaktuator der zugeordneten Radbremseinrichtung ansteuert. Auf diese Weise kann ein modularer, in verschiedenen Fahrzeugbaureihen verwendbarer Aufbau des Bremssystems erreicht werden.

Zweckmäßigerweise ist eine der Moduleinheiten als Anhängersteuermoduleinheit ausgebildet, die den Bremsdruck bzw. die Bremskraft in den Radbremseinrichtungen eines an das Fahrzeug anhängbaren Anhängerfahrzeugs steuern oder regeln kann. Somit ist das als Bremssystem ausgebildete Fahrwerkssystem auch bei Nutzfahrzeugen mit einer Anhängervorrichtung einsetzbar.

Im Folgenden werden Ausführungsformen der Erfindung anhand der beigefügten Zeichnung näher erläutert. Es zeigen:
- Fig. 1: ein Fahrwerksystem in schematischer Darstellung mit einer Steuereinrichtung und vier Moduleinheiten, die über eine zwei Leitungsanordnungen aufweisende Kommunikationseinrichtung verbunden sind,
- Fig. 2: ein Fahrwerksystem in schematischer Darstellung mit einer Steuereinrichtung und zwei Moduleinheiten, die über eine zwei Leitungsanordnungen aufweisende Kommunikationseinrichtung miteinander verbunden sind,
- Fig. 3: Schaltbild einer Ausführungsform eines Verzweigungsoder Abschlusselementes,
- Fig. 4: ein Bremssystem in schematischer Darstellung mit zwei Achsmodulen und
- Fig. 5: ein Bremssystem in schematischer Darstellung mit zwei Radmodulen und einem Anhängersteuermodul.

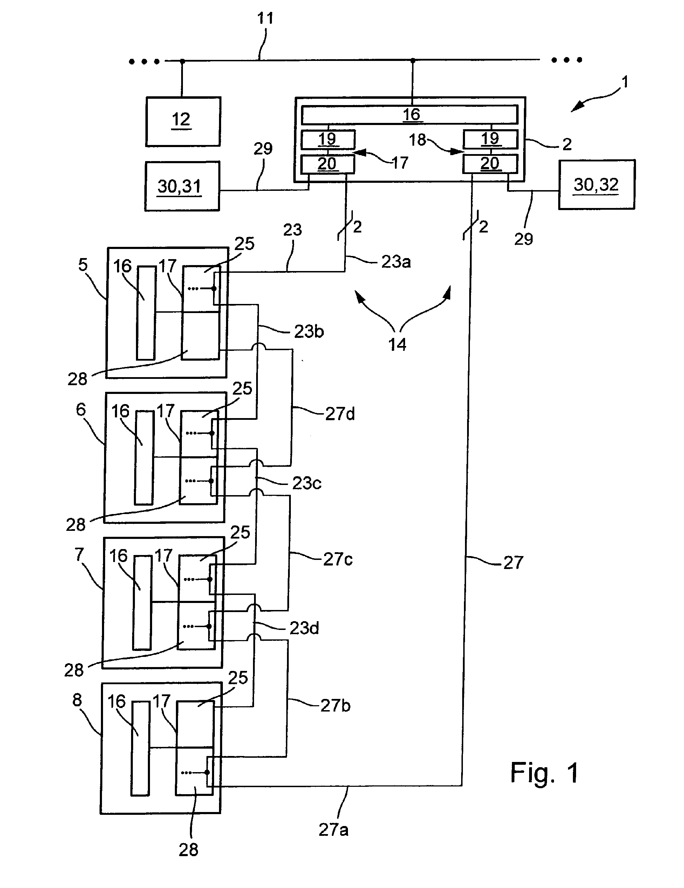

In Fig. 1 ist schematisch ein Fahrwerksystem 1 mit einer Steuereinrichtung 2 und vier Moduleinheiten 5, 6, 7, 8 dargestellt.

Die Steuereinrichtung 2 ist an einen Fahrzeugbus 11, beispielsweise CAN-Bus angeschlossen, an den auch weitere Fahrwerksysteme zur Kommunikation angeschlossen sein können. Beim Ausführungsbeispiel gemäß Fig. 1 ist an den Fahrzeugbus 11 z.B. ein Lenkwinkelsensor 12 angeschlossen, so dass die Lenkwinkelsensordaten für alle mit dem Fahrzeugbus 11 verbundenen Systeme verfügbar sind. Es versteht sich, dass in Abwandlung dieses Ausführungsbeispiels weitere Fahrzeugsensoren ihre Sensordaten mittels des Fahrzeugbusses 11 an die angeschlossenen Systeme übermitteln können.

Die Steuereinrichtung 2 dient als zentrale Steuerung der Moduleinheiten 5, 6, 7, 8 und steht hierfür über eine Kommunikationseinrichtung 14 in Kommunikationsverbindung mit den Moduleinheiten 5, 6, 7, 8. Die Steuereinrichtung 2 übermittelt beispielsweise Steuerbefehle an die Moduleinheiten 5, 6, 7, 8, die wiederum aus diesen Steuersignalen Aktuatorsignale ermitteln und jeweils zugeordnete Aktuatoren - die in Fig. 1 nicht gezeigt sind - entsprechend ansteuern. Über die Kommunikationseinrichtung 14 können Kommunikationssignale bidirektional übertragen werden, so dass auch die Moduleinheiten 5, 6, 7, 8 beispielsweise Fehlermeldungen oder anhand von Sensoren ermittelte Istwerte der Aktuatoren an die Steuereinrichtung 2 übertragen können.

Die Steuereinrichtung 2 verfügt über einen Mikrokontroller 16 und zur Anbindung an die Kommunikationseinrichtung 14 über eine erste Dateneinheit 17 und eine zweite Dateneinheit 18, die jeweils einen Datenbus-Controller 19, beispielsweise CAN-Controller, und eine Übertragungs- und Fehlerermittlungseinheit 20 aufweisen. Derartige Datenbus-Controller 19 sind hinreichend bekannt. Die Übertragungs- und Fehlerermittlungseinheit 20 wertet die über die Kommunikationseinrichtung 14 übertragenen Kommunikationssignale aus und führt Plausibilitätsbetrachtungen durch, um Fehler in den übertragenen Daten, die beispielsweise auf einen Kurzschluss oder eine Unterbrechung in der Kommunikationseinrichtung 14 zurückzuführen sind, festzustellen. Übertragungsfehler können beispielsweise durch redundant über die Kommunikationseinrichtung 14 übertragene Kommunikationssignale in den Übertragungs- und Fehlerermittlungseinheiten 20 erkannt und eliminiert werden, so dass dem Mikrokontroller 16 der Steuereinrichtung 2 aufbereitete Daten aus den empfangenen Kommunikationssignalen zur Verfügung gestellt werden können.

Mit der ersten Dateneinheit 17 der Steuereinrichtung 2 ist eine erste Leitungsanordnung 23 der Kommunikationseinrichtung 14 verbunden. Beispielsgemäß handelt es sich bei der ersten Leitungsanordnung 23 um eine Zweidrahtleitung (z.B. CAN-Busleitung), die ausgehend von der Steuereinrichtung 2 die Moduleinheiten 5, 6, 7, 8 nach einer Art Reihenschaltung verbindet. Die Moduleinheit 5, die als erste Moduleinheit 5 bezeichnet sei, ist dabei direkt mit der Steuereinrichtung 2 über ein erstes Teilstück 23a der Leitungsanordnung 23 verbunden. Die erste Moduleinheit 5 ist wiederum über ein zweites Teilstück 23b der Leitungsanordnung 23 mit einer zweiten Moduleinheit 6, die zweite Moduleinheit 6 über ein drittes Teilstück 23c der Leitungsanordnung 23 mit einer dritten Moduleinheit 7 und schließlich die dritte Moduleinheit 7 über ein viertes Teilstück 23d der Leitungsanordnung 23 mit der vierten Moduleinheit 8 verbunden. Die vierte Moduleinheit 8 kann hier als Endmoduleinheit bezeichnet werden, da die Leitungsanordnung 23 hier endet. Mithin sind die Steuereinrichtung 2 und die vier Moduleinheiten 5, 6, 7, 8 über die Leitungsanordnung 23 sozusagen zu einem "offenen Ring" zusammengeschaltet.

Auch die Moduleinheiten 5, 6, 7, 8 verfügen beim Ausführungsbeispiel gemäß Fig. 1 über jeweils eine erste Dateneinheit 17. In Abwandlung hierzu könnte eine Moduleinheit 5, 6, 7, 8 auch mehrere Dateneinheiten aufweisen. Im Unterschied zu den Dateneinheiten 17, 18 der Steuereinrichtung 2 enthält jede der ersten Dateneinheiten 17 einer Moduleinheit 5, 6, 7, 8 zusätzlich zum Datenbus-Controller 19 und der Übertragungsund Fehlerermittlungseinheit 20 ein erstes Verzweigungs- oder Abschlusselement 25, an das in Abhängigkeit von der Position der Moduleinheit 5 bzw. 6 bzw. 7 bzw. 8 in der Leitungsanordnung 23 einer oder zwei Teilabschnitte der Leitungsanordnung 23 angeschlossen sind. An das erste Verzweigungs- oder Abschlusselement 25 der Endmoduleinheit 8 ist lediglich ein Teilabschnitt 23d der Leitungsanordnung 23 angeschlossen, so dass das erste Verzweigungs- oder Abschlusselement 25 zum elektrischen Abschluss des Teilabschnitts 23d der Leitungsanordnung 23 und zum Abgreifen des Kommunikationssignals für die Endmoduleinheit 8 dient. Die ersten Verzweigungs- oder Abschlusselemente 25 der anderen Moduleinheiten 5, 6, 7 werden dazu genutzt, die von einem der angeschlossenen Teilabschnitte 23a bzw. 23b bzw. 23c bzw. 23d ankommenden Kommunikationssignale zu dem jeweils weiteren angeschlossenen Teilabschnitt 23b bzw. 23a oder 23c bzw. 23b oder 23d bzw. 23c der Leitungsanordnung 23 weiterzuleiten und das betreffende Kommunikationssignal gleichzeitig für die jeweilige Moduleinheit 5, 6, 7 abzugreifen. Es wird quasi eine T-artige Leitungsverzweigung realisiert, wobei die Kommunikationssignale, die von einer der drei Verzweigungsleitungen herkommen, zu den jeweils beiden anderen Verzweigungsleitungen weitergeleitet werden.

Beim Ausführungsbeispiel nach Fig. 1 weist die Kommunikationseinrichtung 14 eine zweite Leitungsanordnung 27 auf, die mittels der zweiten Dateneinheit 18 an die Steuereinrichtung 2 angeschlossen ist. Wie die erste Leitungsanordnung 23, ist auch die zweite Leitungsanordnung 27 hier als Zweidrahtleitung ausgebildet. Allerdings werden die Moduleinheiten 5, 6, 7, 8 ausgehend von der Steuereinrichtung 2 anhand der zweiten Leitungsanordnung 27 in umgekehrter Reihenfolge hintereinander geschaltet, verglichen mit der Verdrahtungsreihenfolge mittels der ersten Leitungsanordnung 23. Direkt an die Steuereinrichtung 2 ist demnach die vierte Moduleinheit 8 oder Endmoduleinheit 8 über einen ersten Teilabschnitt 27a der zweiten Leitungsanordnung 27 angeschlossen. Die Endmoduleinheit 8 ist dann über einen zweiten Teilabschnitt 27b mit der dritten Moduleinheit 7, die dritte Moduleinheit 7 über einen dritten Leitungsabschnitt 27c mit der zweiten Moduleinheit 6 und die zweite Moduleinheit 6 über einen vierten Leitungsabschnitt 27d der zweiten Leitungsanordnung 27 mit der ersten Moduleinheit 5 verbunden. Für die Verbindung mit den Leitungsabschnitten 27a, b, c, d der zweiten Leitungsanordnung 27 weist jede der Moduleinheiten 5, 6, 7, 8 ein zweites Verzweigungs- oder Abschlusselement 28 auf, das dieselbe Funktionsweise wie das erste Verzweigungs- oder Abschlusselement 25 hat. Das zweite Verzweigungs- oder Abschlusselement 28 der ersten Moduleinheit 5 realisiert daher einen Signalabgriff und einen elektrischen Leitungsabschluss für den Teilabschnitt 27d der zweiten Leitungsanordnung, während die zweiten Verbindungs- oder Abschlusselemente 28 der anderen Moduleinheiten 6, 7, 8 jeweils als elektrische, T-artige Verzweigung dienen, wie dies im Zusammenhang mit den ersten Verzweigungs- oder Abschlusselementen 25 oben beschrieben wurde.

Somit wird durch die zweite Leitungsanordnung 27 ein weiterer "offener Ring" gebildet, der von der Steuereinrichtung 2 ausgeht und dann die Moduleinheiten 8, 7, 6, 5 miteinander verbindet, wobei die Verbindungsreihenfolge verglichen mit der ersten Leitungsanordnung 23 genau umgekehrt ist.

Zur Ansteuerung von in Fig. 1 nicht näher dargestellten Aktuatoren, weisen die Moduleinheiten auch jeweils einen Mikrokontroller 16 auf, der zur Weiterverarbeitung von Steuerbefehlen der Steuereinrichtung 2 in Aktuatorsignale für die Beaufschlagung der Aktuatoren dient.

Die Redundanz bei dem in Fig. 1 dargestellten Fahrwerksystem 1 zur Erzielung der Betriebssicherheit wird auf mehrfache Weise erreicht: Zum einen weist die Steuereinrichtung 2 zwei voneinander unabhängige Dateneinheiten 17, 18 auf, an die wiederum jeweils eine Leitungsanordnung 23 bzw. 27 der Kommunikationseinrichtung 14 angeschlossen ist, so dass auch die Kommunikationseinrichtung 14 redundante Übertragungswege bereitstellt. Durch die gegenläufige Verdrahtungsreihenfolge der Moduleinheiten 6, 7, 8 mittels der beiden Leitungsanordnungen 23, 27 können bei Defekten in einer der Moduleinheiten 5 bzw. 6 bzw. 7 bzw. 8 die jeweils anderen Moduleinheiten noch mit der Steuereinrichtung 2 kommunizieren. Auch eine Optimierung der Signallaufzeiten ist aufgrund der gegenläufigen Verbindung durch die beiden Leitungsanordnungen 23, 27 möglich.

Wie dies in Fig. 1 dargestellt ist, können die Dateneinheiten 17, 18 der Steuereinrichtung 2 über zusätzliche Leitungsmittel 29 direkt mit weiteren Fahrzeugeinheiten 30 zur Herstellung einer Kommunikationsverbindung verbunden sein. Mit der ersten Dateneinheit 17 steht beispielsgemäß ein Fahrdynamikregler 31 in Verbindung und die zweite Dateneinheit 18 ist mit einer Luftaufbereitungseinheit 32 verbunden, wie sie für pneumatische Systeme in Lastkraftwagen und Bussen verwendet wird.

Die Dateneinheit 17, 18 der Steuereinrichtung 2 und/oder der Moduleinheiten 5, 6, 7, 8 überprüfen die ankommenden Kommunikationssignale mittels der jeweiligen Übertragungs- und Fehlerermittlungseinheit 20 auf Fehler, die z.B. durch Kurzschluss oder Unterbrechung einer Leitungsanordnung 23, 27 entstehen können. Die von den Dateneinheiten 17, 18 festgestellten Fehler werden mittels der Steuereinrichtung 2 dem Fahrer optisch und/oder akustisch und/oder haptisch angezeigt, damit dieser auf den Fehler angemessen reagieren kann. Dies ist zumindest dann der Fall, wenn durch den Fehler oder den Defekt eine eingeschränkte Funktionalität oder eine eingeschränkte Betriebssicherheit des Fahrwerksystems 1 vorliegt bzw. die Gefahr besteht, dass eine derartige Beeinträchtigung entstehen kann. In Abhängigkeit von der schwere des festgestellten Fehlers kann die Rückmeldung an den Fahrer dann unterbleiben, wenn der Fehler aufgrund der redundanten Auslegung des Systems keine Auswirkungen auf die Funktionalität des Fahrwerksystems hat und eine Gefährdung nicht vorliegt.

Hierfür ist in der Steuerrichtung eine entsprechende Fehlerbewertung vorzunehmen.

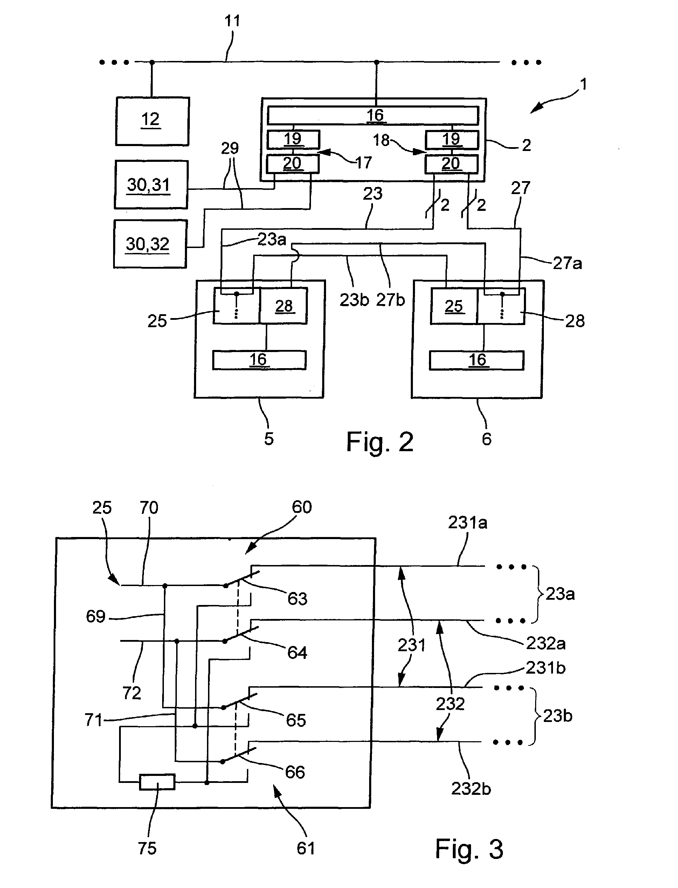

In Fig. 2 ist eine weitere Ausführungsform eines Fahrsystems 1 schematisch dargestellt, wobei gleiche Bestandteile mit den gleichen Bezugszeichen wie in Fig. 1 versehen sind. Hinsichtlich des Aufbaus und der Funktionsweise wird insoweit auf die Beschreibung zu Fig. 1 verwiesen. Im Folgenden werden lediglich die Unterschiede gegenüber dem Ausführungsbeispiel nach Fig. 1 erläutert.

Im Gegensatz zum Ausführungsbeispiel nach Fig. 1 ist bei der Ausführungsform nach Fig. 2 die Kommunikationseinrichtung 14 nur an eine der Dateneinheiten der Steuereinrichtung 2, beispielsgemäß an die zweite Dateneinheit 18 angeschlossen. Beide Leitungsanordnungen 23, 27 sind somit mit der Übertragungs- und Fehlerermittlungseinheit 20 der zweiten Dateneinheit 18 verbunden.

Die Übertragungs- und Fehlerermittlungseinheit 20 dient dabei auch dazu, die an die zweite Dateneinheit 18 angeschlossenen Leitungsanordnungen 23, 27 der Kommunikationseinrichtung 14 logisch miteinander zu verbinden, wobei die beiden Leitungsanordnungen physikalisch voneinander getrennt bleiben, so dass Fehler der einen Leitungsanordnung 23 bzw. 27 nicht auf die andere Leitungsanordnung 27 bzw. 23 über die zweite Dateneinheit 18 einwirken. Es versteht sich, dass diese Funktion in Abwandlung zur Ausführung nach Fig. 2 allen oder mehreren der vorhandenen Dateneinheiten zur Verfügung stehen kann, an die mehrere elektrische Leitungen angeschlossen sind.

Bei dieser Ausführungsvariante weist die Steuereinrichtung 2 eine Dateneinheit - nämlich die erste Dateneinheit 17 - auf, die ausschließlich zur Verbindung mit zusätzlichen Fahrzeugeinheiten 30 über separate Leitungsmittel 29 dient, wobei hier der Fahrdynamikregler 31 und die Luftaufbereitungseinheit 32 an die erste Dateneinheit 17 angeschlossen sind. Zusätzlich könnte z.B. auch noch ein Lenkradwinkelsensor über die Leitungsmittel 29 mit der ersten Dateneinheit 17 verbunden sein. Mithin weist die Steuereinrichtung 2 eine Dateneinheit 17 auf, die ausschließlich zur Verbindung mit weiteren Fahrzeugeinheiten 30 dient, wohingegen eine weitere Dateneinheit 18 der Steuereinrichtung 2 nur zur Verbindung mit der Kommunikationseinrichtung 14 vorgesehen ist.

Im Unterschied zur Ausführung gemäß Fig. 1 sind beim Ausführungsbeispiel nach Fig. 2 lediglich zwei Moduleinheiten 5, 6 vorgesehen, die über die beiden Leitungsanordnungen 23, 27 mit der Steuereinrichtung 2 in Verbindung stehen. Insoweit weisen die beiden Leitungsanordnungen 23, 27 jeweils nur zwei Teilabschnitte 23a, 23b bzw. 27a, 27b auf. Bei dieser Ausführungsform bildet die Moduleinheit 5 die erste Moduleinheit, die direkt über den ersten Teilabschnitt 23a der ersten Leitungsanordnung mit der Steuereinrichtung 2 und gleichzeitig über den zweiten Teilabschnitt 23b der ersten Leitungsanordnung mit der Moduleinheit 6, die hier die Endmoduleinheit darstellt, verbunden ist. Mittels der zweiten Leitungsanordnung 27 sind die Moduleinheiten 5, 6 in umgekehrter Reihenfolge hintereinandergeschaltet, so dass der erste Teilabschnitt 27a der zweiten Leitungsanordnung eine Verbindung zwischen der Steuereinrichtung 2 und der hier als Endmoduleinheit bezeichneten Moduleinheit 6 darstellt, wobei der zweite Teilabschnitt 27b der zweiten Leitungsanordnung die beiden Moduleinheiten 5, 6 verbindet. Das Verdrahtungsprinzip ist jedoch das gleiche wie beim ersten Ausführungsbeispiel aus Fig. 1.

In Fig. 3 ist eine Ausführung eines sozusagen konfigurierbaren Verzweigungs- oder Abschlusselementes dargestellt. Das Verzweigungs- oder Abschlusselement kann entweder als Verzweigungs- oder als Abschlusselement eingestellt werden. Das in Fig. 3 gezeigte Verzweigungs- Abschlusselement ist beispielsgemäß das erste Verzweigungs- Abschlusselement 25 der ersten Moduleinheit 5, wobei selbstverständlich auch alle anderen Moduleinheiten und/oder auch die Steuereinrichtung 2 über ein Verzweigungs- Abschlusselement nach Fig. 3 zur Herstellung der elektrischen Verbindung mit der Kommunikationseinrichtung 14 verfügen kann.

Das erste Verzweigungs- Abschlusselement 25 ist an die beiden Teilabschnitte 23a und 23b der ersten Leitungseinrichtung 23 angeschlossen, die als Zweidrahtleitung realisiert ist und hier über eine erste Signalleitung 231 (z.B. CAN-HIGH-Signalleitung) und eine zweite Signalleitung 232 (z.B. CAN-LOW-Signalleitung) verfügt, die entsprechend der ersten Leitungsanordnung 23 wiederum jeweils in die Teilabschnitte 231a bzw. 232a und 231b bzw. 232b unterteilt sind.

Der erste Teilabschnitt 23a der Leitungsanordnung 23 ist an eine erste Schaltanordnung 60 und der zweite Teilabschnitt 23b an eine zweite Schaltanordnung 61 des Verzweigungs- Abschlusselements 25 angeschlossen. Die erste Schaltanordnung 60 weist einen ersten Schalter 63 und einen zweiten Schalter 64 auf, die gemeinsam umschaltbar sind, wie die gestrichelt in Fig. 3 gezeigt ist. Entsprechend weist die zweite Schaltanordnung 61 einen ersten Schalter 65 und einen zweiten Schalter 66 auf, die ebenfalls gemeinsam umschaltbar sind.

In der ersten Schaltstellung der ersten Schaltanordnung 60, die in Fig. 3 dargestellt ist, verbindet der erste Schalter 63 der ersten Schaltanordnung 60 den ersten Teilabschnitt 231a der ersten Signalleitung 231 mit einer ersten Verbindungsleitung 69 und einer ersten Abgriffsleitung 70, die als Signalabgriff für die erste Moduleinheit 5 dient. Der zweite Schalter 64 der ersten Schaltanordnung 60 verbindet in dieser ersten Schaltstellung den ersten Teilabschnitt 232a der zweiten Signalleitung 232 mit einer zweiten Verbindungsleitung und einer zweiten Abgriffsleitung 72, die als Signalabgriff für die erste Moduleinheit 5 dient.

Der erste Schalter 65 der zweiten Schaltanordnung 61 verbindet in der ersten Schaltstellung - wie in Fig. 3 gezeigt-den zweiten Teilabschnitt 231b der ersten Signalleitung 231 mit der ersten Verbindungsleitung 69 und der ersten Abgriffsleitung 70. In dieser ersten Schaltstellung verbindet der zweite Schalter 66 der zweiten Schaltanordnung 61 den zweiten Teilabschnitt 232b der zweiten Signalleitung 232 mit der zweiten Verbindungsleitung 71 und der zweiten Abgriffsleitung 72.

Mithin ist in der ersten Schaltstellung eine elektrische Verbindung hergestellt zwischen dem ersten und zweiten Teilabschnitt der ersten Signalleitung 231 und der ersten Abgriffsleitung 70 sowie zwischen den ersten und zweiten Teilabschnitten der zweiten Signalleitung 232 und der zweiten Abgriffsleitung 72. Diese Schaltstellung ermöglicht die Funktion, die das erste Verzweigungs- und Abschlusselement 25 der ersten Moduleinheit 5 ausführt.

Wird eine der Schaltanordnungen 60, 61 in die nicht gezeigte zweite Schaltstellung überführt, so wirkt das Verzweigungsund Abschlusselement als Leitungsabschluss für einen der Leitungsabschnitte der angeschlossenen Leitungsanordnung, wobei dann nur dieser elektrisch abzuschließende eine Leitungsabschnitt an das Verzweigungs- und Abschlusselement angeschlossen ist. In dieser zweiten Schaltstellung trennt die betreffende Schaltanordnung 60, 61 die Verbindung zwischen der jeweils zugeordneten Verbindungsleitung 69, 71 und dem jeweils zugeordneten Teilabschnitt 23a, 23b der ersten Leitungsanordnung 23 auf und verbindet die Verbindungsleitungen 69, 71 jeweils mit einem Abschlusswiderstand 75, dessen Widerstandswert z.B. 120 Ω betragen kann.

Wird die erste Schaltanordnung 60 in die zweite Schaltstellung gebracht, so wird gemäß Fig. 3 der zweite Leitungsabschnitt 23b der ersten Leitungsanordnung 23 mittels des Abschlusswiderstands 75 abgeschlossen. Der zweite Teilabschnitt 231b der ersten Signalleitung 231 ist dabei über den ersten Schalter 65 der zweiten Schaltanordnung 61, die erste Verbindungsleitung 69 und den ersten Schalter 63 der ersten Schaltanordnung 60 mit dem Abschlusswiderstand 75 verbunden. Analog dazu ist der zweite Teilabschnitt 232b der zweiten Signalleitung 232 über den zweiten Schalter 66 der zweiten Schaltanordnung 61, die zweite Verbindungsleitung 71 und den zweiten Schalter 64 der ersten Schaltanordnung 60 mit dem Abschlusswiderstand 75 verbunden.

Auf gleiche Weise kann der erste Teilabschnitt 23a der ersten Leitungsanordnung elektrisch mit dem Abschlusswiderstand 75 verbunden werden, wenn die zweite Schaltanordnung 61 in die zweite Schaltstellung gebracht wird. Dann ist der erste Leitungsabschnitt 231a der ersten Signalleitung 231 über den ersten Schalter 63 der ersten Schaltungsanordnung 60, die erste Verbindungsleitung 69 und den ersten Schalter 65 der zweiten Schaltanordnung 61 mit dem Abschlusswiderstand 75 verbunden. Gleichzeitig ist dann der erste Leitungsabschnitt 232a der zweiten Signalleitung 232 über den zweiten Schalter 64 der ersten Schaltungsanordnung 60, die zweite Verbindungsleitung 71 und den zweiten Schalter 66 der zweiten Schaltanordnung 61 mit dem Abschlusswiderstand 75 verbunden.

Alternativ zum Abschlusswiderstand kann auch ein ohmsches und/oder kapazitives und/oder induktives Abschlusselement eingesetzt werden, das einen an die zugeordnete Leitung angepassten Widerstandswert bildet.

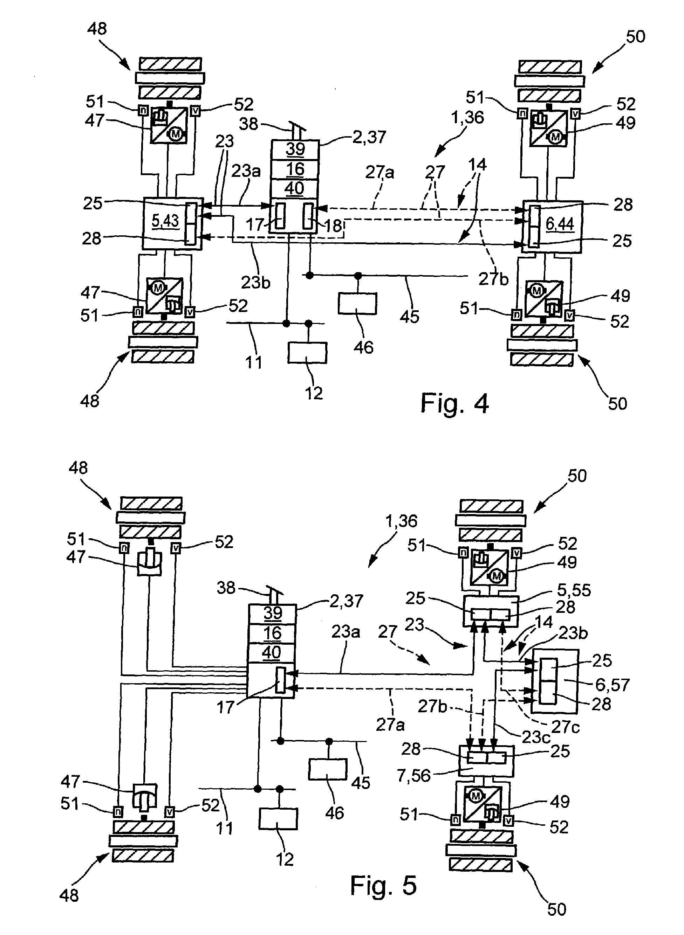

Fig. 4 zeigt ein Ausführungsbeispiel eines von einem Bremssystem 36 gebildeten Fahrwerksystems 1 in schematischer Prinzipdarstellung. Die Steuereinrichtung 2 ist dabei als Bremssteuereinrichtung 37 mit einem die Stellung eines Bremspedals 38 ermittelnden Bremswertgeber 39, dem Bremssollwerte bestimmenden Mikroprozessor 16 und einem durch das Bremspedal 38 steuerbaren Bremsventil 40 ausgebildet, wobei das Bremsventil 40 zur Steuerung des Bremsdrucks einer nicht näher dargestellten pneumatischen oder hydraulischen Rückfallebene des Bremssystems 36 dient. Die erste Dateneinheit 17 und die zweite Dateneinheit 18 der Bremssteuereinrichtung 37 sind in Fig. 4 schematisch dargestellt.

Wie bereits im Zusammenhang mit Fig. 1 und 2 grundsätzlich erläutert, ist die Bremssteuereinrichtung 37 mittels der zwei Leitungsanordnung 23, 27 aufweisenden Kommunikationseinrichtung 14 mit der ersten Moduleinheit 5, die hier als Vorderachsmoduleinheit 43 des Fahrzeugs ausgebildet ist, und der zweiten Moduleinheit 6, die hier als Hinterachsmoduleinheit 44 ausgebildet ist, verbunden. Die Vorderachsmoduleinheit 43 und die Hinterachsmoduleinheit 44 sind dabei jeweils über das erste Verzweigungs- oder Anschlusselement 25 mit der ersten Leitungsanordnung 23 und über das zweite Verbindungs- oder Anschlusselement 28 mit der Leitungsanordnung 27 verbunden. Der erste Teilabschnitt 23a der ersten Leitungsanordnung verbindet mithin die Bremssteuereinrichtung 37 mit der vorderachsmoduleinheit 43, wobei der zweite Leitungsabschnitt 23b der ersten Leitungsanordnung die Vorderachsmoduleinheit 43 und die Hinterachsmoduleinheit 44 verbindet. Die zweite Leitungsanordnung 27 verbindet mit ihrem ersten Teilabschnitt 27a die Steuereinrichtung 2 mit der Hinterachsmoduleinheit 44, wobei der zweite Teilabschnitt 27b der zweiten Leitungsanordnung 27 ausgehend von der Hinterachsmoduleinheit 44 zur Vorderachsmoduleinheit 43 führt und diese beiden Moduleinheiten 44, 43 miteinander verbindet. An die Bremssteuereinrichtung 37 ist weiterhin der Fahrzeugbus 11 angeschlossen, wie dies im Zusammenhang mit Fig. 1 erläutert wurde. Gemäß Fig. 4 steht zudem ein weiteres Bussystem in Kommunikationsverbindung mit der Bremssteuereinrichtung 37, beispielsgemäß ein Sensorbus 45, der zur Verbindung der Steuereinrichtung 2 bzw. 37 mit weiteren Sensorvorrichtungen 46 dient. Derartige Sensorvorrichtungen sind beispielsweise dazu vorgesehen, zusätzliche Fahrzustandssignale zu erfassen, die dann über den Sensorbus 45 an die von der Bremssteuereinrichtung 37 gebildete Steuereinrichtung 2 übermittelt werden, wobei es sich beispielsweise um Beschleunigungs- oder Gierratensignale handeln kann.

Die Vorderachsmoduleinheit 43 ist mit den der Vorderachse des Fahrzeugs zugeordneten Vorderachsradbremsaktuatoren 47 der Vorderachsradbremseinrichtungen 48 zu deren Ansteuerung in Abhängigkeit von den Steuerbefehlen der Bremssteuereinrichtung 37 elektrisch verbunden. In gleicher Weise ist die Hinterachsmoduleinheit 44 mit den Hinterachsradbremsaktuatoren 49 der Hinterachsradbremseinrichtungen 50 zu deren Ansteuerung in Abhängigkeit von den Steuerbefehlen der Bremssteuereinrichtung 37 elektrisch verbunden. Sowohl die Vorderachsradbremsaktuatoren 47 als auch die Hinterachsradbremsaktuatoren 49 sind hier wahlweise als elektromotorisch oder pneumatisch betriebene Aktuatoren ausgebildet. Jeder der Vorderachsradbremseinrichtungen 48 und der Hinterachsradbremseinrichtungen 50 ist jeweils ein Raddrehzahlsensor 51 und ein Bremsbelagverschleißsensor 52 zugeordnet, der die Raddrehzahlen bzw. den Bremsbelagverschleiß erfasst und an die zugeordnete Vorderachsmoduleinheit 43 bzw. Hinterachsmoduleinheit 44 übermittelt. Diese Daten können dann über die Kommunikationseinrichtung 14 an die Bremssteuereinrichtung 37 übermittelt werden, so dass die Steuerung der Bremskräfte beispielsweise in Abhängigkeit des jeweiligen Radschlupfes bzw. des jeweiligen Bremsbelagverschleißes gesteuert oder geregelt werden kann. Derartige Bremssteuerungen bzw. Regelungen können zentral in der Bremssteuereinrichtung 37 oder dezentral in den hier vorgesehenen Achsmodulen 43, 44 erfolgen.

Das Bremssystem 36 kann als elektrohydraulisches oder elektropneumatisches Bremssystem mit einer nicht näher dargestellten hydraulischen bzw. pneumatischen Rückfallebene ausgeführt sein, die bei Ausfall der elektrischen Steuerung bzw. Regelung zum Abbremsen des Fahrzeugs genutzt werden kann.

Fig. 5 zeigt eine weitere Ausführungsform eines als Bremssystem 36 ausgebildeten Fahrwerksystems 1. Gleiche Bestandteile des Bremssystems sind mit gleichen Bezugszeichen versehen, so dass diesbezüglich auf die Beschreibung der Fig. 4 Bezug genommen wird. Die Unterschiede in Funktion und Aufbau gegenüber dem Bremssystem nach Fig. 4 werden nachfolgend erläutert.

Die Bremssteuereinrichtung 37 ist bei der Ausführungsform nach Fig. 5 direkt elektrisch mit den Radbremsaktuatoren 47 der Vorderachse und den der Vorderachsradbremseinrichtungen 48 zugeordneten Raddrehzahlsensoren 51 und Bremsbelagverschleißsensoren 52 verbunden. Die Sensorsignale der Raddrehzahlsensoren 51 und der Bremsbelagverschleißsensoren 52 der Vorderachse werden direkt der Bremssteuereinrichtung 37 zugeführt. Die Vorderachsradbremsaktuatoren 47 sind beispielsgemäß im Unterschied zur Ausführungsform nach Fig. 4 pneumatisch betätigt, wobei der Bremsdruck durch entsprechende Ventile, die von der Bremssteuereinrichtung 37 angesteuert werden, einstellbar sind. Der pneumatische Teil des Bremssystems 36 ist in Fig. 5 nicht gezeigt.

Die Bremssteuereinrichtung 37 weist gemäß Fig. 5 lediglich eine Dateneinheit - nämlich die erste Dateneinheit 17 - auf, die zur Verbindung mit der ersten Leitungsanordnung 23 und der zweiten Leitungsanordnung 27 der Kommunikationseinrichtung 14 dient. Mit der Bremssteuereinrichtung 37 sind über die Kommunikationseinrichtung 14 die erste Moduleinheit 5, die zweite Moduleinheit 6 und die dritte Moduleinheit 7 verbunden. Mittels der ersten Leitungsanordnung 23 ist dabei die Bremssteuereinrichtung 37 über den ersten Teilabschnitt 23a mit der ersten Moduleinheit 5, die erste Moduleinheit 5 über den zweiten Teilabschnitt 23b mit der zweiten Moduleinheit 6 und die zweite Moduleinheit 6 über den dritten Teilabschnitt 23c mit der dritten Moduleinheit 7 verbunden, so dass die dritte Moduleinheit 7 im vorliegenden Ausführungsbeispiel die Endmoduleinheit darstellt. Mittels der zweiten Leitungsanordnung 27 sind die Bremssteuereinrichtung 37 und die Moduleinheiten 5, 6, 7 über die Teilabschnitte 27a, 27b und 27c verglichen mit der Verbindungsreihenfolge bei der ersten Leitungsanordnung 23 in umgekehrter Reihenfolge nacheinander geschaltet.

Die erste Moduleinheit 5 ist hier als erste Radmoduleinheit 55 und die dritte Moduleinheit 7 als zweite Radmoduleinheit 56 ausgeführt, wobei die beiden Radmoduleinheiten 55, 56 der Hinterachse des Fahrzeugs zugeordnet sind. Die Radbremsaktuatoren 49 der Hinterachse werden über die jeweils zugeordnete Radmoduleinheit 55, 56 angesteuert. Sie sind im vorliegenden Fall als wahlweise elektromotorisch oder pneumatisch betätigte Radbremsaktuatoren 49 ausgebildet.

Die zweite Moduleinheit 6 ist beim Bremssystem 36 nach Fig. 5 als Anhängersteuermoduleinheit 57 realisiert, die zur Steuerung oder Regelung des Bremsdrucks bzw. der Bremskraft in den Radbremseinrichtungen eines nicht näher dargestellten Anhängerfahrzeugs dient, das an das Fahrzeug angehängt werden kann.

In Abwandlung der Ausführungsform nach Fig. 5 kann die Anhängersteuermoduleinheit 57 auch direkt über nicht näher gezeigte weitere Leitungsmittel mit der Bremssteuereinrichtung 37 in Kommunikationsverbindung stehen.

Es versteht sich, dass auch Kombinationen der hier dargestellten Ausführungsbeispiele möglich sind. Beispielsweise könnte ein Bremssystem an einer der Fahrzeugachsen auch eine Achsmoduleinheit zur Ansteuerung der dieser Achse zugeordneten Radbremseinrichtungen aufweisen, während an einer anderen Fahrzeugachse den Radbremseinrichtungen jeweils eine Radmoduleinheit zugeordnet sein kann. Grundsätzlich ist die Anzahl der über eine Leitungsanordnung mit der Steuereinrichtung 2 verbundenen Moduleinheiten beliebig.

Als Fahrwerksystem 1 kommt nicht nur ein Bremssystem 37 in Betracht, sondern das Fahrwerksystem 1 kann auch als Lenksystem oder als System zur Steuerung der Vertikaldynamik eines Fahrzeugs ausgebildet sein. Es ist auch möglich, Moduleinheiten verschiedener Fahrwerksysteme über die Leitungsanordnungen 23, 27 der Kommunikationseinrichtung 14 mit einer zentralen Steuereinrichtung 2 zur Kommunikation zu verbinden.

## Patentansprüche

1. Fahrwerksystem für ein Fahrzeug mit einer Steuereinrichtung (2, 37) und mit einer Kommunikationseinrichtung (14) mittels der eine Kommunikationsverbindung zwischen der Steuereinrichtung (2, 37) und wenigstens zwei Moduleinheiten (5, 6, 7, 8) herstellbar ist, die zur Umsetzung der Steuerbefehle der Steuereinrichtung (2, 37) in Aktuatorsignale für jeweils zugeordnete Aktuatoren (47, 49) dienen,
**dadurch gekennzeichnet,**
**dass** die Kommunikationseinrichtung (14) eine Leitungsanordnung (23) aufweist, die die Steuereinrichtung (2, 37) direkt mit einer als erste Moduleinheit (5) bezeichneten Moduleinheit und ausgehend von der ersten Moduleinheit (5) weiter über die gegebenenfalls vorhandenen weiteren Moduleinheiten (6; 7) mit einer als Endmoduleinheit (6; 7; 8) bezeichneten Moduleinheit verbindet und an der Endmoduleinheit (6; 7; 8) endet.

2. Fahrwerksystem nach Anspruch 1,
**dadurch gekennzeichnet,**
**dass** die Kommunikationseinrichtung (14) eine weitere, zweite Leitungsanordnung (27) aufweist, die die Steuereinrichtung (2, 37) direkt mit der Endmoduleinheit (6; 7; 8) und ausgehend von der Endmoduleinheit (6; 7; 8) weiter über die gegebenenfalls vorhandenen weiteren Moduleinheiten (7; 6) mit der ersten Moduleinheit (5) verbindet.

3. Fahrwerksystem nach Anspruch 1,
**dadurch gekennzeichnet,**
**dass** die Steuereinrichtung (2, 37) und die Moduleinheiten (5, 6, 7, 8) jeweils eine Dateneinheit (17; 18) zum Senden und/oder Empfangen und/oder Aufbereiten von Kommunikationssignalen aufweisen, die mit der Leitungsanordnung (23; 27) verbunden ist.

4. Fahrwerksystem nach Anspruch 2,
**dadurch gekennzeichnet,**
**dass** die Steuereinrichtung (2; 37) und/oder zumindest eine der Moduleinheiten (5; 6; 7; 8) jeweils eine Dateneinheit (17) zum Senden und/oder Empfangen und/oder Aufbereiten von Kommunikationssignalen aufweisen, die mit der ersten und der zweiten Leitungsanordnung (23; 27) verbunden ist.

5. Fahrwerksystem nach Anspruch 2,
**dadurch gekennzeichnet,**
**dass** die Steuereinrichtung (2; 37) und/oder zumindest eine der Moduleinheiten jeweils eine erste und eine zweite Dateneinheit (17, 18) zum Senden und/oder Empfangen und/oder Aufbereiten von Kommunikationssignalen aufweisen, wobei die erste Dateneinheit (17) mit der ersten Leitungsanordnung (23) und die zweite Dateneinheit (18) mit der zweiten Leitungsanordnung (27) verbunden ist.

6. Fahrwerksystem nach einem der Ansprüche 3 bis 5,
**dadurch gekennzeichnet,**
**dass** zumindest mit einer der Dateneinheiten (17; 18) der Steuereinrichtung (2, 37) weitere Fahrzeugeinheiten (30) über zusätzlich zur Kommunikationseinrichtung (14) vorgesehene Leitungsmittel (29) zur Herstellung einer Kommunikationsverbindung verbindbar sind.

7. Fahrwerksystem nach einem der Ansprüche 3 bis 6,
**dadurch gekennzeichnet,**
**dass** die Dateneinheiten (17, 18) zur Überprüfung der auf den jeweils zugeordneten Leitungsanordnungen (23, 27) übertragenen Kommunikationssignalen auf Fehler dienen.

8. Fahrwerksystem nach Anspruch 7,
**dadurch gekennzeichnet,**
**dass** die festgestellte Fehler dem Fahrer zumindest dann angezeigt werden, wenn durch den Fehler eine eingeschränkte Funktionalität oder Betriebssicherheit des Fahrwerksystems (1) entstanden ist oder entstehen kann.

9. Fahrwerksystem nach einem der Ansprüche 1 bis 8,
**dadurch gekennzeichnet, dass** es sich bei dem Fahrwerksystem (1) um ein Bremssystem (36) handelt.

10. Fahrwerksystem nach Anspruch 9,
**dadurch gekennzeichnet,**
**dass** zumindest einer der Fahrzeugachsen eine als Achsmoduleinheit (43, 44) bezeichnete Moduleinheit (5, 6) zugeordnet ist, die die Radbremsaktuatoren (47, 48) der Radbremseinrichtungen (48, 50) der betreffenden Fahrzeugachse ansteuert.

11. Fahrwerksystem nach Anspruch 9 oder 10
**dadurch gekennzeichnet,**
**dass** jedem Fahrzeugrad wenigstens einer Fahrzeugachse eine als Radmoduleinheit (55, 56) bezeichnete Moduleinheit (5, 7) zugeordnet ist, die den Radbremsaktuator (49) der zugeordneten Radbremseinrichtung (50) ansteuert.

12. Fahrwerksystem nach einem der Ansprüche 9 bis 11,
**dadurch gekennzeichnet,**
**dass** eine der Moduleinheiten (6) als Anhängersteuermoduleinheit (57) ausgebildet ist, die zur Steuerung oder Regelung des Bremsdrucks bzw. der Bremskraft in den Radbremseinrichtungen eines an das Fahrzeug anhängbaren Anhängerfahrzeugs vorgesehen ist.
